# EUROPÄISCHE PATENTANMELDUNG

(11) **EP 0 680 856 A2**
(43) Veröffentlichungstag der Anmeldung: **08.11.1995**
(21) Anmeldenummer: 95104576.4
(22) Anmeldetag: 28.03.1995
(51) Int. Cl.: B60R 22/46

(54) **Vorrichtung zum Drehantrieb eines Sicherheitsgurtstraffers**

(30) Priorität: 06.05.1994 DE 4416199; 17.05.1994 DE 4417225
(71) Anmelder: HS Technik und Design Technische Entwicklungen GmbH, D-82234 Wessling (DE)
(72) Erfinder: Specht, Martin, D-82340 Feldafing (DE)
(74) Vertreter: Nöth, Heinz, Dipl.-Phys.

(57) **Zusammenfassung**

Eine Vorrichtung zum Straffen eines Kraftfahrzeugsicherheitsgurtes mittels eines pyrotechnischen Antriebs mit mehreren Treibladungen (8), die in zeitlicher Aufeinanderfolge auf einen mit dem zu straffenden Gurtband verbindbaren Rotor (1) wirken, wobei jeweilige Zündeinrichtungen (22) der in der zeitlichen Aufeinanderfolge auf die erste Treibladung folgenden Treibladungen mittels Zünddruckes zündbar sind, der durch die jeweils vorher gezündete Treibladung erzeugt wird.

## Beschreibung

Die Erfindung betrifft eine Vorrichtung nach dem Oberbegriff des Patentanspruches 1.

Eine derartige Vorrichtung für einen pyrotechnischen Drehantrieb ist aus der DE 29 31 164 bekannt, wobei eine in einem Rohr geführte Schubgliederkette von außen auf den Rotorumfang zur Einwirkung gebracht wird. Aus der DE 29 46 130 A1 ist es bekannt, zur Gurtstraffung im Gurtspuleninnern in separaten Kammern in Form von Flüssigkeit mehrere Massen anzuordnen, die durch eine Treibladung aus den Kammern zur Erzeugung einer Drehbewegung eines mit der Gurtspule verbundenen Rotors beschleunigbar sind. Ferner ist es aus der DE 93 08 273 U1 bekannt, zeitlich versetzt angetriebene Antriebskörper mit dem Umfang eines mit der Gurtspule verbundenen Rotors zur Gurtstraffung in Antriebsverbindung zu bringen.

Aufgabe der Erfindung ist es, ein kompaktes Antriebsmittel für einen Sicherheitsgurtstraffer zu schaffen.

Diese Aufgabe wird erfindungsgemäß durch die kennzeichnenden Merkmale des Patentanspruches 1 gelöst.

Bei der Erfindung werden die eine oder mehrere Massen durch mehrere zeitlich aufeinander folgende Treibgasschübe beschleunigt. Bei der Bewegung der beschleunigten Massen entsteht ein freiwerdender Raum (Volumen), das durch Erzeugung von aufeinander folgenden Treibgasdrücken in diesem sich erweiternden Raum dafür sorgt, daß die Masse bzw. die Massen entlang einer erforderlichen Bewegungsstrecke beschleunigt werden und die dabei erzeugten Kräfte in eine Drehbewegung des Rotors umgesetzt werden. Die beschleunigte Masse bzw. die beschleunigten Massen werden z.B. entlang einer gekrümmten oder geradlinigen Bahn in der Weise geführt, daß die bei ihrer Beschleunigung erzeugten Kräfte wirkungsvoll in eine Drehbewegung des Rotors umgesetzt werden. Durch die Mehrfachzündung der Treibmittel läßt sich eine wegabhängige optimale Leistungsausbeute erreichen.

Die Bewegungsrichtung der jeweiligen auf den Rotor wirkenden Masse bzw. Massen gegenüber der Umfangsfläche des Rotors kann tangential oder in einem spitzen Winkel im Bereich von etwa 40° bis 50°, insbesondere etwa 45°, verlaufen. Hierdurch wird ein hohes Drehmoment für den sich drehenden Rotor erzeugt. Die zu beschleunigenden Massen können in Form einer Schubgliederkette im Drehantrieb, z.B. im Rotor oder in einem den Rotor umgebenden Gehäuse, angeordnet sein. Die Schubgliederkette kann sich dabei geradlinig erstrecken, in bevorzugter Weise ist sie jedoch bei ihrer Anordnung im Rotor um die Rotorachse angeordnet. Die Schubgliederkette kann eine Spiralform oder Teilkreisform haben. Die Spirale der Schubgliederkette ist in bevorzugter Weise um die Rotorachse angeordnet. Die Spirale besitzt bevorzugt einen konstanten Anstieg um ein sich steigerndes Drehmoment des sich drehenden Rotors, um die Rotorachse zu erzeugen.

Ferner können mehrere Schubglieder mit jeweils zugeordneten Treibladungen um die Rotorachse angeordnet sein. Die Bewegungsrichtung dieser in Umfangsrichtung aufeinander folgenden Schubglieder haben gleiche Wirkelabstände voneinander. Wenn beispielsweise vier Schubglieder um die Rotorachse angeordnet sind, besitzen die Bewegungsrichtungen voneinander 90°-Winkelabstände. Bei drei Schubgliedein besitzen deren Bewegungsrichtungen 120°-Winkelabstände.

Die Treibgasladungen der mehreren Schubglieder werden in zeitlicher Aufeinanderfolge gezündet.

Anhand der Figuren werden Ausführungsbeispiele der Erfindung erläutert. Es zeigt:
- Fig. 1:: ein erstes Ausführungsbeispiel;
- Fig. 2:: ein zweites Ausführungsbeispiel;
- Fig. 3:: ein drittes Ausführungsbeispiel;
- Fig. 4 (A - C):: ein viertes Ausführungsbeispiel;
- Fig. 5:: ein fünftes Ausführungsbeispiel;
- Fig. 6:: ein sechstes Ausführungsbeispiel: und
- Fig. 7:: ein siebentes Ausführungsbeispiel.

Die Drehantriebe der Ausführungsbeispiele besitzen ein im wesentlichen zylindrisch ausgebildetes Gehäuse 4, welches seitlich am Rahmen eines Gurtaufrollers 15 befestigt ist. Im Innern dieses Gehäuses 4 ist drehbar ein Rotor 1 gelagert.

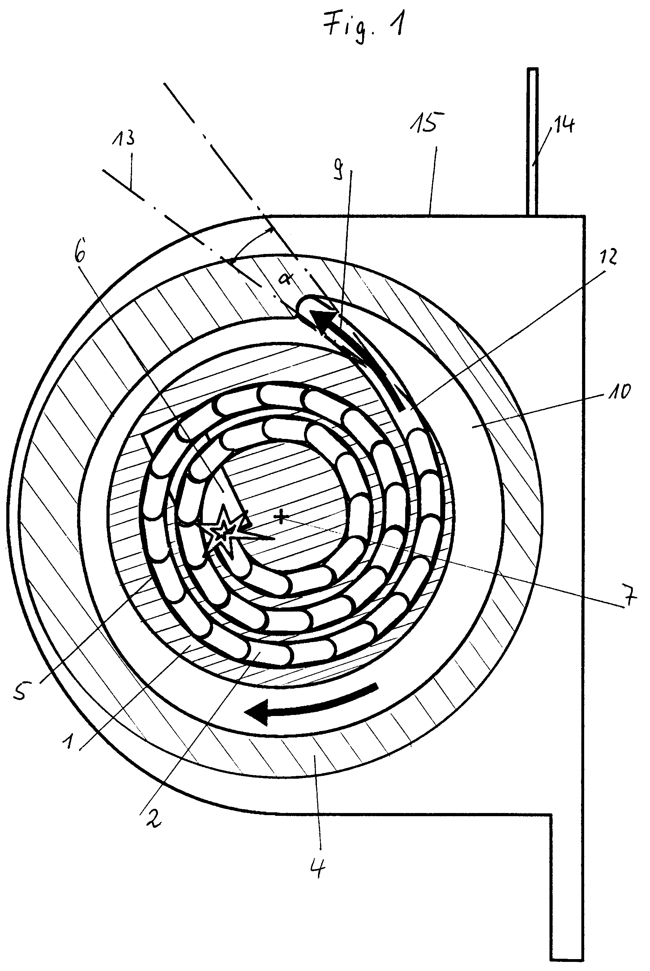

Beim Ausführungsbeispiel der Fig. 1 sind im Rotorinnern mehrere Schubglieder 2 in Form einer Schubgliederkette 5 angeordnet. Die Schubgliederkette 5 bestitzt eine Spiralform mit konstantem Anstieg. Jedes Schubglied bildet ein Kettenglied. Die Spirale ist um eine Rotorachse 7 angeordnet.

Für die Schubgliederkette 5 ist eine gemeinsame Treibladung 6, beispielsweise in Form mehrerer nacheinander zündbarer Treibgasgeneratoren, vorgesehen. Bei Zündung einer ersten Treibladung werden die Schubglieder der spiralförmigen Schubgliederkette 5 aus dem Rotor 1 auf der spiralförmigen Bahn nach außen gegen das Gehäuseinnere getrieben. Nach ihrem Austritt aus dem Rotor 1 stützt sich die Schubgliederkette 5 an der Gehäuseinnenseite ab. An der Innenseite des Gehäuses 4 ist ein Aufnahme- bzw. Auffangraum 10 gebildet, in welchem die aus dem Rotor 1 ausgetriebenen Schubglieder 2 sich in Kettenform anlagern. Der Auffangraum 10 kann klemmende Wirkung zum Festhalten der aus dem Rotor 1 ausgetretenen Schubglieder 2 haben und beispielsweise als Klemmnut ausgebildet sein.

Die hintereinander aus dem Rotor 1 durch eine Austrittsöffnung 12 austretenden Schubglieder 2 haben eine Bewegungsrichtung 9. Diese Bewegungsrichtung 9 besitzt gegenüber einer Tangente 13 an die Außenkontur des Rotors 1 im Austrittspunkt des jeweiligen Schubgliedes einen spitzen Winkel α.

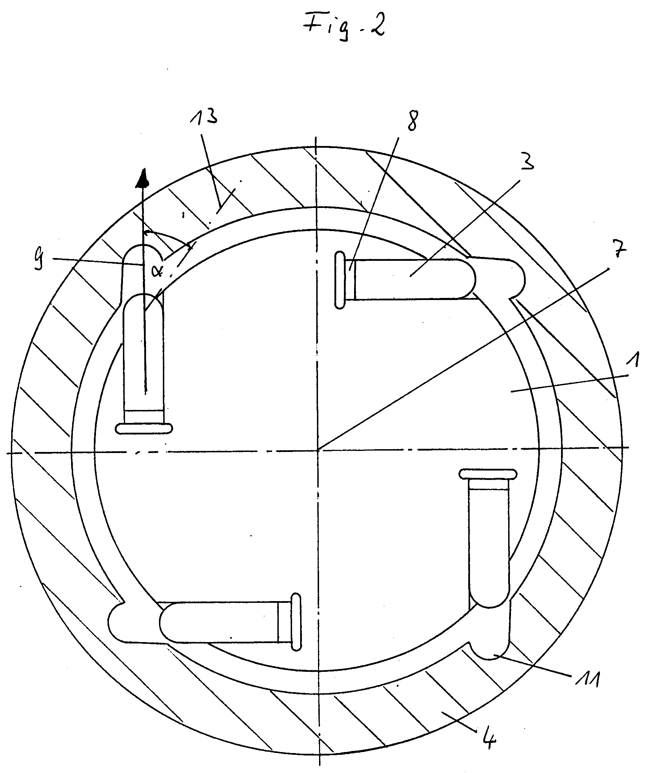

Bei dem in der Fig. 2 dargestellten Ausführungsbeispiel sind auf einem Kreis um die Rotorachse 7 mehrere (im Ausführungsbeispiel vier) Schubglieder 3 angeordnet. Jedem Schubglied 3 ist eine zugeordnete Treibladung 8, z.B. in Form eines Gasgenerators, zugeordnet.

Die Bewegungsrichtungen 9 der Schubglieder 3 beim Verlassen des Rotors 1 in Richtung zu Auffangräumen 11 haben gleiche Winkelabstände (90° beim Ausführungsbeispiel) zueinander.

Die Bewegungsrichtungen 9 bilden ebenfalls zur jeweiligen Tangente 13 an die Außenkontur des Rotors 1 am Austrittsort des Schubgliedes aus dem Rotor einen spitzen Winkel α.

Die Treibladungen 8 der in Umfangsrichtung aufeinander folgenden Schubglieder 3 können in zeitlicher Aufeinanderfolge gezündet werden, so daß ein fortlaufender Antrieb des Rotors 1 beim Strammvorgang erreicht wird. Derartige Treibladungen können auch den jeweiligen Schubgliedern des Ausführungsbeispiels der Fig. 1 zugeordnet sein.

Bei den dargestellten Ausführungsbeispielen sind die Schubglieder im Rotor 1 angeordnet. Die Schubglieder können auch im Gehäuse 4 angeordnet sein und tangential oder mit spitzem Winkel zur Rotoroberfläche auf den Rotor zu beschleunigt werden. Dabei wird die kinetische Energie der Schubglieder in Strammarbeit zur Straffung eines Gurtbandes 14 durch den sich drehenden Rotor 1 umgesetzt.

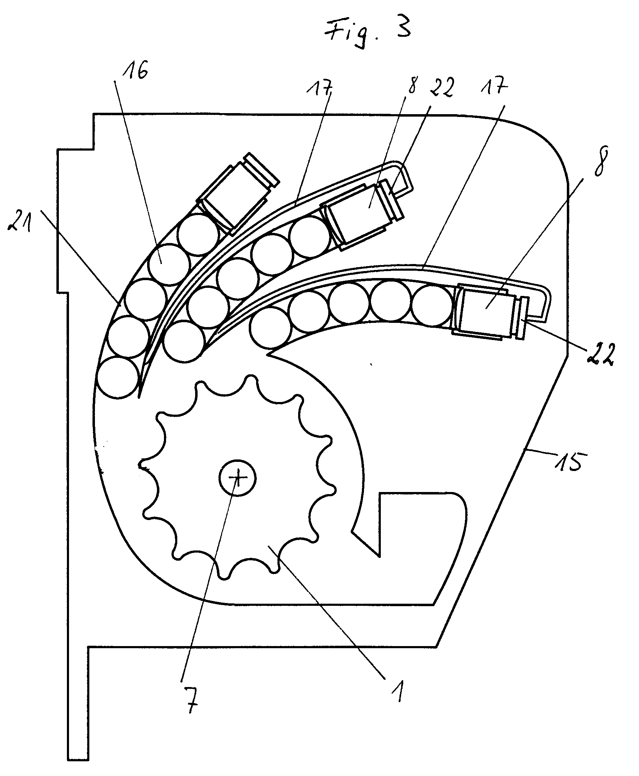

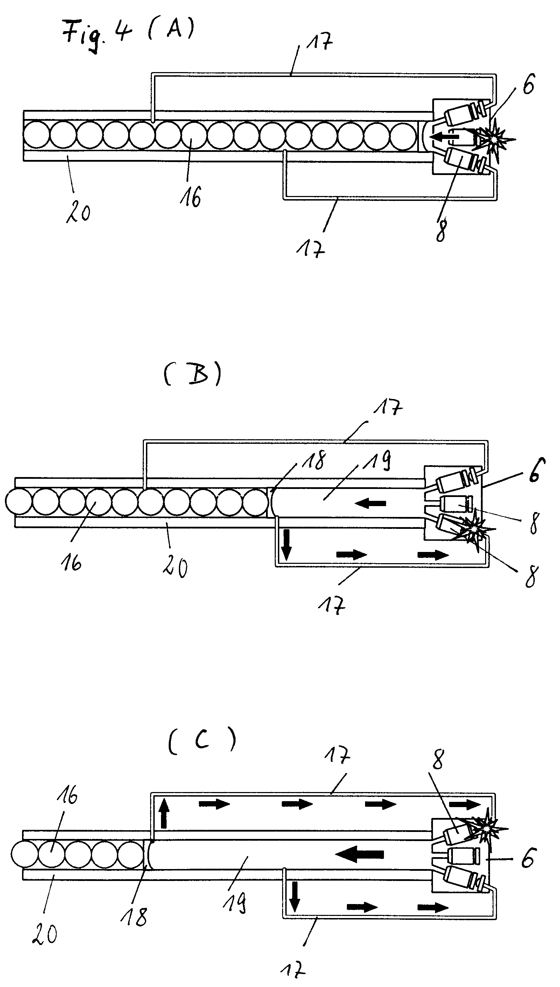

Bei den in den Figuren 3 und 4 dargestellten Ausführungsbeispielen werden von außen als Kugeln 16 ausgebildete Schubglieder mit der Rotoroberfläche in kraftübertragenden Eingriff gebracht. Bei dem in Fig. 4 dargestellten Ausführungsbeispiel sind mehrere hintereinander angeordnete Kugeln in jeweiligen gekrümmten Führungen 21 angeordnet. Jeder Führung ist die Treibladung 8 zugeordnet. Bei Zündung der ersten Treibladung 8 (in der linken Führung 21) werden die Kugeln durch einen Schubkolben 18 angetrieben, so daß sie mit den an der Umfangsfläche des Rotors 1 vorgesehenen Ausnehmungen in form- und kraftschlüssigen Eingriff kommen und den Rotor 1 antreiben.

In den vorderen Teil der Führung 21 mündet in der Nähe der Austrittsöffnung der Kugeln 16 ein Zünddruckkanal 17. Die Öffnung des Zünddruckkanals 17 in das Innere der Führung 21 ist verschlossen. Der Verschluß wird vom Schubkolben 18 geöffnet, so daß der Treibgasdruck, welcher auf den Schubkolben 18 wirkt, durch den Zünddruckkanal 17 auf eine druckempfindliche Zündeinrichtung 22 der Treibladung 8 für die Kugeln 16 in der nächstfolgenden Führung 21 wirkt. Durch den Zünddruck im Zünddruckkanal 17 wird die druckempfindliche Zündung 22 betätigt und die Treibladung 8 gezündet, so daß die Kugeln 16, wie schon erläutert, für den Antrieb des Rotors 1 aus der Führung 21 bewegt werden. Auch bei der dritten Führung 21, welche sich rechts anschließt, erfolgt die Zündung der Treibladung 8 und Beschleunigung der darin angeordneten Kugeln 16.

Bei dem in der Fig. 4 (A - C) dargestellten Ausführungsbeispiel wirken auf die Kugeln 16, welche in einer im wesentlichen geradlinig verlaufenden Führung 20 angeordnet sind, mehrere Treibladungen 8 der Treibladungsanordnung 6 in zeitlicher Aufeinanderfolge. Die Kugeln 16 werden ebenfalls in tangentialer Richtung mit der Oberfläche des nicht näher dargestellten Rotors 1 in form- und kraftschlüssigen Eingriff gebracht, wie das in der Fig. 3 dargestellt ist. Zur Beschleunigung der als Kugeln 16 ausgebildeten Massen dient die Treibladungsanordnung 6, in welcher mehrere Teibladungen 8 (beim dargestellten Ausführungsbeispiel 3 drei Treibladungen) vorgesehen sind. Die Treibladungen 8 werden in zeitlicher Aufeinanderfolge gezündet. Der Treibgasdruck wirkt auf den Schubkolben 18, der die Kugeln 16 beschleunigt in der Führung 20 zur Oberfläche des Rotors 1 bewegt. Die Zündung der ersten Treibladung 8 ist in der Fig. 4 (A) dargestellt.

Wenn sich der Kolben 18 mit den beschleunigten Kugeln 16 an dem zuerst in die Führung 20 einmündenden Zünddruckkanal 17 vorbeibewegt haben (Fig. 4 B), wirkt durch den Zünddruckkanal 17 auf die druckempfindliche Zündeinrichtung 22 der anschließend zu zündenden Treibladung 8 der erforderliche Zünddruck. Die Treibladung 8 wird, wie in Fig. 4 (B) dargestellt ist, zur Zündung gebracht. Der Treibgasdruck wirkt dann in einem durch die Bewegung der Kugeln 16 frei gewordenen Raum 19 und beschleunigt die Kugeln 16 in Richtung zur Oberfläche des Rotors 1 hin, bis der Schubkolben 18 die Einmündung eines zweiten Zünddruckkanals 17 in die Führung 20 passiert hat. Durch den im Zünddruckkanal 17 wirkenden Zünddruck wird dann die dritte Treibladung 8 zur Zündung gebracht (Fig. 4 C). Der dabei erzeugte Treibladungsdruck wirkt in dem erweiterten frei gewordenen Raum 19 und beschleunigt über den Schubkolben 18 die Kugeln 16.

Die Drehbewegung bzw. das Drehmoment des Rotors 1 wird über eine nicht näher dargestellte Kupplung, welche in bekannter Weise ausgebildet sein kann, auf die Wickelwelle übertragen. Der Drehantrieb läßt sich in kompakter Weise direkt am Gehäuse bzw. am Rahmen des Gurtaufrollers befestigen, wobei die Rotorachse 1 und die Wickelwellenachse koaxial angeordnet sein können.

Es ist auch möglich, den Rotor 1 drehfest mit der Wickelwelle des Gurtaufrollers 15 zu verbinden. Dadurch, daß die Schubglieder 2 bzw. 3 bzw. die Kugel 16 nach Abgabe ihrer kinetischen Energie an den Rotor 1 in Auffangräumen untergebracht sind, ist eine freie Drehung des Rotors 1 und der damit verbundenen Wickelwelle des Gurtaufrollers 15 nach dem Strammen des Gurtbandes 14 möglich.

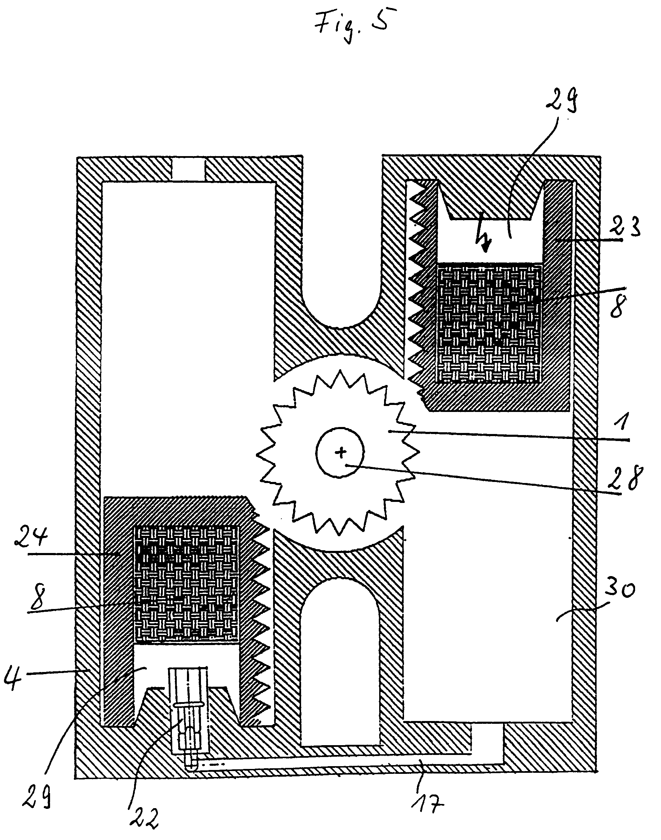

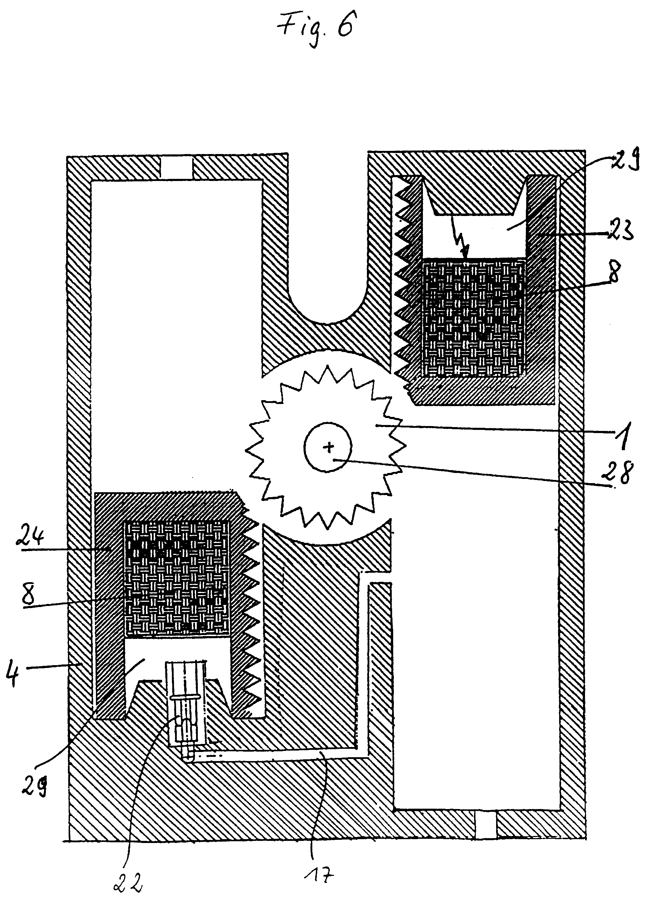

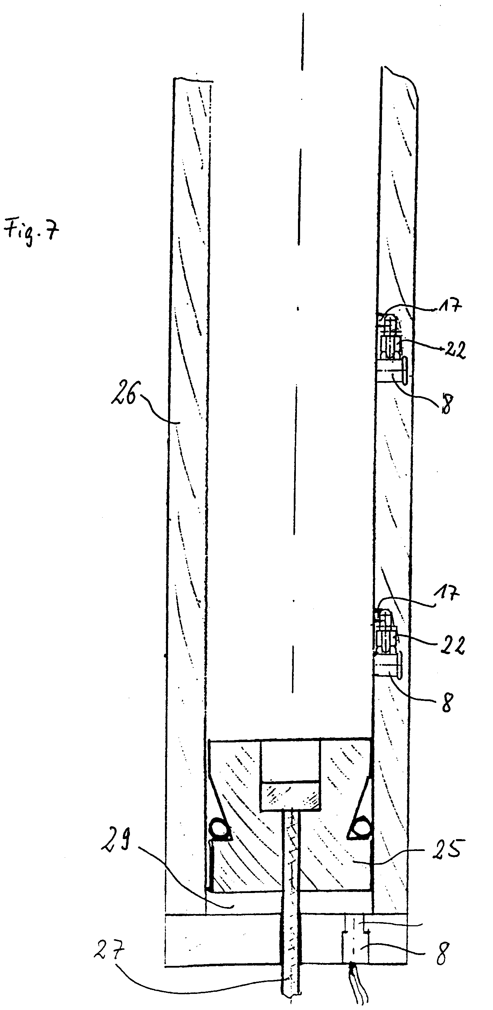

Bei den in den Figuren 5 und 6 dargestellten Ausführungsbeispielen werden Kolben 23 und 24 in zeitlicher Aufeinanderfolge beschleunigt angetrieben und mit dem Rotor 1 in Antriebsverbindung gebracht. Bei dem Ausführungsbeispiel der Fig. 7 wird ein Kolben 25 innerhalb eines Führungsrohres 26 von mehreren zeitlich nacheinander zur Zündung gebrachten Treibladungen 8 angetrieben. Die Antriebsbewegung des Kolbens 25 wird über ein Zugseil 27, wie noch näher erläutert wird, zur Straffung des Gurtbandes verwendet.

Die jeweilige Zündeinrichtung 22 der in der zeitlichen Aufeinanderfolge auf die erste Treibladung folgenden Treibladungen wird mittels eines Zünddruckes gezündet, der durch die jeweils vorherige Treibladung erzeugt wird.

Bei dem Zünddruck kann es sich um einen von der Treibladung 8 in einem Druckraum 29 erzeugten Antriebsdruck handeln, der auf den Kolbenantrieb (Kolben 23) in Gurtstrafferrichtung wirkt (Fig. 6). Der Zünddruck kann jedoch auch gebildet werden in einem Verdichtungsraum 30 durch die Kolbenbewegung (Kolben 23) beim Kolbenantrieb (Fig. 5).

Der Zünddruck kann über den Zünddruckkanal 17 auf die druckempfindliche Zündeinrichtung 22 wirken. Der Druckkanal 17 ist in bevorzugter Weise beispielsweise mit Hilfe eines Schiebers geschlossen und kann durch den sich bewegenden Kolben 23 geöffnet werden. Der Öffnungszeitpunkt kann durch die Kolbenbewegung sehr exakt bestimmt werden, so daß nicht nur die zeitliche Aufeinanderfolge der Zündung der Treibladungen genau eingehalten wird, sondern auch gewährleistet ist, daß ein ausreichender Zünddruck zur Betätigung derjeweiligen Zündeinrichtung 22 vorhanden ist.

Bei den in den Figuren 5 und 6 dargestellten Ausführungsbeispielen werden Kolben 23 und 24 linear bewegt. Der Antrieb des mit der Wickelwelle 28 verbundenen bzw. verbindbaren als Zahnrad ausgebildeten Rotors 1 erfolgt durch Zahnstangeneingriff mit dem jeweils bewegten Kolben 23 und 24, wie es im einzelnen in der deutschen Gebrauchsmusterschrift 93 08 273 beschrieben ist. Die beiden Kolben 23, 24 befinden sich in ihren Ausgangspositionen. Um auf die Wickelwelle 28 eine Strammbewegung zu übertragen, wird zunächst durch Zündung der Treibladung 8, welche im Kolben 23 vorgesehen sein kann oder auch in einem Druckraum 29 angeordnet sein kann, zunächst der Kolben 23 aus seiner oberen Ausgangsstellung in eine untere Position angetrieben, wobei über den Rotor 1 die Wickelwelle 28 mitgedreht wird. Beim Ausführungsbeispiel der Fig. 5 wird im Verdichtungsraum 30 ein Druck aufgebaut, der über den Zünddruckkanal 17 auf die druckempfindliche Zündeinrichtung 22 zur Zündung der zweiten Treibladung 8 im Kolben 24 wirkt. Die zweite Treibladung 8 kann auch im Druckraum 29 vorgesehen sein. Die Kolbenbewegungen sind so aufeinander abgestimmt, daß dann, wenn der Kolben 23 mit seinem Zahnstangeneingriff sich vollständig am Rotor 1 vorbeibewegt hat, der Kolben 24 zur nachfolgenden Strammbewegung angetrieben wird. Durch den Zahnstangeneingriff wird die lineare Antriebsbewegung der beiden Kolben 23 und 24 in eine Drehantriebsbewegung für die Wickelwelle 28 umgewandelt.

Während beim Ausführungsbeispiel der Fig. 5, wie schon erläutert, durch Aufbau eines Zünddruckes im Verdichtungsraum 30 die Zündeinrichtung 22 zur Zündung gebracht wird, erfolgt beim Ausführungsbeispiel der Fig. 6 die Zündung durch den im expandierten Druckraum 29 erzeugten Treibgasdruck über den Zünddruckkanal 17. Der Treibgasdruck wirkt sich dann aus, wenn, wie schon erläutert, der Kolben 23 sich in seiner unteren Position befindet, so daß in zeitlicher Aufeinanderfolge die beiden Kolben 23 und 24 auch beim Ausführungsbeispiel der Fig. 6 für den Drehantrieb der Wickelwelle 28 bewegt werden. Am Ende des Kolbens 23 kann ein Mittel zum Öffnen des zunächst geschlossenen Zünddruckkanals 17 vorgesehen sein.

Bei dem in der Fig. 7 dargestellten Ausführungsbeispiel ist ein Antriebskolben 25 vorgesehen. Dieser Antriebskolben 25 wird linear in einem Führungsrohr 26 bewegt. Auch bei diesem Ausführungsbeispiel ist eine erste Treibladung 8 vorgesehen, mit welcher der Kolben 25 aufgrund des im Druckraum 29 erzeugten Treibgasdruckes aus seiner Ruhelage in die Antriebsbewegung gebracht wird.

Mit dem Kolben 25 ist das Zugseil 27 verbunden. Dieses Zugseil 27 kann über eine Seilrolle, welche die Funktion des Rohres 1 hat, auf die Wickelwelle des Gurtaufrollers wirken, wie es beispielsweise in der EP 0 529 265 A1 erläutert ist.

Entlang dem Führungsweg des Kolbens 25 im Rohr 26 befinden sich weitere Treibladungen 8 mit den zugeordneten Zündeinrichtungen 22 und den Zünddruckkanälen 17. Beim Vorbeibewegen des Kolbens 25, der an einer geeigneten Stelle Mittel zum Öffnen der Zünddruckkanäle 17 aufweist, werden die Treibladungen 8 gezündet, so daß in zeitlicher Aufeinanderfolge mehrere Treibladungen in dem frei werdenden Raum (Volumen) auf den Kolben 25 einwirken.

## Patentansprüche

1. Vorrichtung zum Drehantrieb eines Sicherheitsgurtstraffers mit einem in einem Gehäuse drehbaren und mit einer Gurtspule eines Gurtaufrollers verbundenen oder verbindbaren Rotors (1), der von einer oder mehreren durch gezündetes Treibgas beschleunigte Massen (2; 3; 16) und der dabei erzeugten und in eine Drehbewegung des Rotors umsetzbaren Kräfte antreibbar ist,
dadurch **gekennzeichnet,**
daß die eine oder mehreren Massen (2; 3; 16) von mehreren zeitlich nacheinander gezündeten Treibladungen (8) angetrieben ist bzw. sind.

2. Vorrichtung nach Anspruch 1, dadurch gekennzeichnet, daß die eine oder mehreren Massen (2; 3; 16) in einer Führungseinrichtung (20; 21) geführt sind und daß die bei ihrer Beschleunigung erzeugten Kräfte in eine Drehbewegung des Rotors umgesetzt sind.

3. Vorrichtung nach Anspruch 1 oder 2, dadurch gekennzeichnet, daß der bei den jeweils nachfolgenden Treibgaszündungen erzeugte Treibgasdruck in einem durch die bewegte bzw. bewegten Massen (2; 3; 16) freigegebenen Raum (19) vorgesehen ist.

4. Vorrichtung nach einem der Ansprüche 1 bis 3, dadurch gekennzeichnet, daß von den jeweils gezündeten Treibladungen (8) mehrere Massen (2; 3; 16) beschleunigt sind.

5. Vorrichtung nach einem der Ansprüche 1 bis 3, dadurch gekennzeichnet, daß jede der mehreren zu beschleunigenden Massen (2; 3) jeweils zugeordnete Treibladungen (8) aufweist.

6. Vorrichtung nach einem der Ansprüche 1 bis 5, dadurch gekennzeichnet, daß nach einer jeweiligen bestimmten Antriebsbewegungsstrecke der Masse bzw. Massen die jeweilige Treibgaszündung erfolgt.

7. Vorrichtung nach einem der Ansprüche 1 bis 5, dadurch gekennzeichnet, daß die jeweiligen Zündeinrichtungen der in der zeitlichen Aufeinanderfolge auf die erste Treibladung folgenden Treibladungen mittels eines Zünddruckes zündbar sind, der durch die jeweils vorherige Treibladung erzeugt ist.

8. Vorrichtung nach Ansspruch 7, dadurch gekennzeichnet, daß der Zünddruck über einen Zünddruckkanal auf die jeweilige Zündeinrichtung wirkt.

9. Vorrichtung nach Anspruch 8, dadurch gekennzeichnet, daß der Zünddruckkanal geschlossen ist und für die Einwirkung des Zünddruckes auf die Zündung durch eine der bewegten Massen geöffnet ist.

10. Vorrichtung nach einem der Ansprüche 1 bis 9, dadurch gekennzeichnet, daß die Bewegungsrichtung der jeweils auf den Rotor wirkenden Massen gegenüber der Umfangsfläche des Rotors einen spitzen Winkel α bildet.

11. Vorrichtung nach einem der Ansprüche 1 bis 10, dadurch gekennzeichnet, daß die mehreren Massen eine oder mehrere Schubgliederketten bilden.

12. Vorrichtung nach Anspruch 11, dadurch gekennzeichnet, daß die Schubgliederkette um die Rotorachse angeordnet ist.

13. Vorrichtung nach Anspruch 10 oder 11, dadurch gekennzeichnet, daß die Schubgliederkette spiralförmig ausgebildet ist.

14. Vorrichtung nach Anspruch 5 oder 12, dadurch gekennzeichnet, daß die Bewegungsrichtung der in Rotorumfangsrichtung aufeinander folgenden Massen gleiche Winkelabstände voneinander haben.

15. Vorrichtung nach einem der Ansprüche 1 bis 14, dadurch gekennzeichnet, daß die Massen im Rotor angeordnet sind und in Richtung zur Innenseite des Gehäuses beschleunigt bewegbar sind.

16. Vorrichtung nach Anspruch 15, dadurch gekennzeichnet, daß das Gehäuse einen oder mehrere Auffangräume für die aus dem Rotor kommenden Massen an seiner Innenseite aufweist.

17. Vorrichtung nach einem der Ansprüche 1 bis 14, dadurch gekennzeichnet, daß die Massen von außen in Richtung auf die Umfangsfläche des Rotors beschleunigt bewegbar sind.

18. Vorrichtung nach einem der Ansprüche 1 bis 17, dadurch gekennzeichnet, daß die zu beschleunigenden Massen in mehreren Führungsbahnen vorgesehen sind.
